# EUROPÄISCHE PATENTSCHRIFT

(11) **EP 4 431 981 B1**
(45) Veröffentlichungstag und Bekanntmachung des Hinweises auf die Patenterteilung: **10.09.2025**
(21) Anmeldenummer: 24153800.8
(22) Anmeldetag: 24.01.2024
(51) Int. Cl.: G01S 7/497, G01S 7/481, G01S 17/42

(54) **AUSGERICHTETER SENSOR**
ALIGNED SENSOR
CAPTEUR ORIENTÉ

(30) Priorität: 17.03.2023 DE 102023106750
(43) Veröffentlichungstag der Anmeldung: 18.09.2024
(73) Patentinhaber: SICK AG, 79183 Waldkirch (DE)
(72) Erfinder: Nübling, Ralf Ulrich, 79211 Denzlingen (DE); Pfeil, Jonathan, Bad Krozingen (DE)

(56) Entgegenhaltungen:
- EP-A1- 4 137 843
- WO-A1-2022/213786
- DE-A1- 10 135 109
- US-A1- 2004 217 899
- US-A1- 2017 006 197
- US-A1- 2023 077 077

## Beschreibung

Die Erfindung betrifft ein Sensormodul für einen Sensor, insbesondere ein optoelektronisches Sensormodul für einen optoelektronischen Sensor, und ein Verfahren zur Herstellung eines ausgerichteten Sensormoduls nach dem Oberbegriff von Anspruch 1 beziehungsweise 6.

Es gibt Sensoren, die auf vielfältigsten Sensorprinzipien basieren und die an ihrem Betriebsort einer Ausrichtung bedürfen. Im Folgenden werden optische Erfassungsprinzipien als Beispiel herangezogen, bei denen die Ausrichtung regelmäßig besonders präzise sein muss. Ein verbreiteter optoelektronischer Sensor ist der Laserscanner, der sich für Erfassungen und Abstandsmessungen eignet, die einen großen horizontalen Winkelbereich des Messsystems erforderlich machen. In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Laserscanner ausgewertet. Aus der Winkelstellung der Ablenkeinheit wird auf die Winkellage des Objektes und aus der Lichtlaufzeit unter Verwendung der Lichtgeschwindigkeit in einem Phasen- oder Pulsverfahren zusätzlich auf die Entfernung des Objektes von dem Laserscanner geschlossen. Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder deren Kontur bestimmen.

Neben solchen Messanwendungen werden Laserscanner auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS).

Laserscanner sind aus einer Vielzahl von toleranzbehaften Einzelteilen aufgebaut. Infolgedessen ergeben sich Fertigungsschwankungen für Lichtaustritt und Scanebene: Die Höhe und Ausrichtung der Scanebene variieren in gewissem Rahmen von Gerät zu Gerät. Aus Kostengründen ist es nicht immer möglich, die Toleranzen in dem Laserscanner von vomeherein so klein zu halten, dass die individuellen Schwankungen nicht stören. Das macht in den meisten Anwendungen eine händische Ausrichtung bei der Installation erforderlich. Bei einem späteren Austausch des Laserscanners muss die Ausrichtung wiederholt werden. Zudem sind Halterungen notwendig, die überhaupt eine Ausrichtung ermöglichen. Solche Halterungen sind teuer und benötigen zusätzlichen Bauraum.

Es ist bekannt, ein Gerät mit Füßchen zu versehen, die in ihrer Höhe verstellbar sind. Das ist aber nur ein Beispiel für eine soeben genannte Halterung, die eine Ausrichtung ermöglicht. Das Ausrichten selbst ist damit nicht vollzogen, und solche Füßchen bergen immer die Gefahr, dass durch gewollte oder ungewollte Manipulation im Laufe des Betriebs die Ausrichtung verloren geht.

Die DE 20 2015 106 370 U1 offenbart ein weiteres Beispiel einer Halterung zum Ausrichten eines Laserscanners. Mittels einer Verzahnung zweier Halterungsteile kann der bereits montierte Laserscanner noch verdreht werden. Aus der EP 1 852 646 A2 und der US 2009/294619 A1 sind jeweils einstellbare Halterungen für einen Projektor bekannt. Mit keiner dieser Halterungen sind die oben genannten Nachteile überwunden.

Aus der DE 101 35 109 A1 ist eine elektronische Baugruppe mit einer richtungsabhängigen Sensoranordnung bekannt, deren tatsächliche Messachsen von definierten Messachsen um Neigungswinkel abweichen können. Zur Nachjustierung ist eine Haltevorrichtung aus zwei flächigen Trägern mit verstellbaren Abstandshaltem dazwischen vorgesehen.

Die US 2004/0217899 A1loffenbart ein Radarsystem mit einem System zur Anpassung des Erfassungsbereichs an einen Reflektor in einer Fahrzeugmitte, das Anpassungsboizen verwendet.

Es ist daher Aufgabe der Erfindung, die Ausrichtung eines Sensors zu verbessern.

Diese Aufgabe wird durch ein Sensormodul für einen Sensor, insbesondere ein optoelektronisches Sensormodul für einen optoelektronischen Seosor, und ein Verfahren zur Herstellung eines ausgerichteten Sensormoduls nach Anspruch 1 bezienungsweise 6 gelöst. Als Sensormodul wird eine Baugruppe bezeichnet, in der die eigentlichen Sen-sorelemente zusammengefasst sind. Es kann sich hier beispielsweise um eine Sende-Empfangsbaugruppe für die Sensorsignale handeln. Das Sensormodul umfasst eine Sensoreinheit. Das ist nun der funktionale Kern des Sensormoduls, wobei der genauere Aufbau vom jeweiligen Sensorprinzip und Sensortyp abhängt. Bei einem optoelektronischen Sensor kann die Sensoreinheit beispielsweise einen Bildsensor oder einen einfacheren Lichtempfänger aufweisen, möglicherweise kombiniert mit einem Lichtsender Die Sensoreinheit hat eine Erfassungsrichtung und eine Erfassungshöhe, mit denen sich die Ausrichtung charakterisieren lässt. Bei einem optoelektronischen Sensor entspricht das beispielsweise der Orientierung der optischen Achse und der Höhe ihres Durchstoßpunktes aus dem Sensor beziehungsweise in den Sensor. Bei einer Kamera wird damit beschrieben, auf welcher Höhe ihr Sichtfeld liegt und wie es ausgerichtet ist. Bei einem aktiven optoelektronischen Sensor, etwa einem Lichttaster, beschreiben die beiden Größen die Orientierung des Abtaststrahls und die Höhe des Lichtaustritts bezüglich des Sensors.

Das Sensormodul umfasst weiterhin ein Modulgehäuse, in dem sich die Sensoreinheit befindet. Der Begriff Modulgehäuse ist erst einmal weit zu verstehen. Erfindungsgemäß kommt es auf eine erste Außenwand des Modulgehäuses an, die beispielsweise lediglich als Sockel ausgebildet sein kann. Lediglich vorzugsweise umfasst das Modulgehäuse weitere Gehäuse- oder Außenwände, die es zu einem Gehäuse im engeren Sinne machen und die vorzugsweise die Sensoreinheit von allen Seiten umschließen. Es ist denkbar, dass zusätzlich zu der ersten Außenwand mindestens eine weitere Außenwand deren Rolle einnehmen kann, etwa wenn das Sensormodul wahlweise nach rechts oder links an einer Wand oder in einem Umgehäuse montiert oder beispielsweise auf den Kopf gestellt werden kann.

Durch Anordnung der ersten Außenwand an einer ebenen Grundfläche werden die Orientierung und Höhenposition des Modulgehäuses und damit die Erfassungsrichtung und Erfassungshöhe der Sensoreinheit festgelegt. Die ebene Grundfläche ist je nach Ausführungsform diejenige eines Umgehäuses oder einer Montage- beziehungsweise Aufstellumgebung. Beispielsweise wird das Sensormodul mit der ersten Außenwand als Bezugsfläche an einer beliebigen Wand des Umgehäuses angeordnet, vorzugsweise unten. Oder es wird selbst, ohne Umgehäuse, mit der ersten Außenwand als Unterseite auf den Boden oder einen Werktisch gestellt oder mit der ersten Außenwand als Rückwand oder Seitenwand an einer Wand montiert. In diesem Zusammenhang ist darauf hinzuweisen, dass Begriffe wie Höhe und Erfassungshöhe sich an eine aufrechte Orientierung des Sensors mit horizontaler ebener Grundfläche anlehnen, bei seitlicher Montage ist die Höhe als seitlicher Abstand zu der dann vertikalen ebenen Grundfläche aufzufassen, und entsprechend bei beliebigen anderen Orientierungen des Sensors und der ebenen Grundfläche.

Die Erfindung geht von dem Grundgedanken aus, der ersten Außenwand eine dreidimensionale Kontur zu geben, die bei Anordnung an der ebenen Grundfläche die individuelle Erfassungsrichtung und/oder Erfassungshöhe der Sensoreinheit korrigiert. Die erste Außenwand hat, um ihre Funktion als Außenwand zu erfüllen, eine flächige Ausdehnung. Die dreidimensionale Kontur bezieht eine dritte Dimension senkrecht zu der flächigen Ausdehnung ein, die als Höhe oder Dicke bezeichnet werden kann. Lokale Anteile der dreidimensionalen Kontur sorgen für einen Ausgleich der Erfassungsrichtung, und ihre Gesamtdicke sorgt für einen Ausgleich der Erfassungshöhe. Für die Ausgleichsfunktion relevant sind dabei nur die Kontaktpunkte und/oder Kontaktflächen zwischen erster Außenwand und ebener Grundfläche, dazwischen ist die dreidimensionale Kontur letztlich beliebig und kann beispielsweise kleinere oder größere Aussparungen aufweisen. Es sind demnach Ausführungsformen mit vollflächigem Kontakt, nur wenigen Auflagepunkten, vorzugsweise drei Auflagepunkten, und beliebige Mischformen mit flächigem und/oder punktuellem Kontakt denkbar. Die dreidimensionale Kontur korrigiert je nach Ausführungsform nur die Erfassungsrichtung, nur die Erfassungshöhe oder beides.

Aufgrund von Fertigungstoleranzen weist jedes Sensormodul eine individuelle Erfassungsrichtung und Erfassungshöhe auf. Um dies auszugleichen, ergibt sich eine entsprechende individuelle dreidimensionale Kontur mit einer Abweichung von einer herkömmlichen, ebenen Außenwand in Form und/oder Dicke. Insbesondere ist die dreidimensionale Kontur invers zu den individuellen Abweichungen von einer spezifizierten Erfassungsrichtung und/oder Erfassungshöhe geformt. Ist beispielsweise die Sensoreinheit in ihrem Gehäuse nach links geneigt, wird vorzugsweise die erste Außenwand im gleichen Maße links erhöht, um die Sensoreinheit in die in diesem Beispiel spezifizierte Horizontale zu bringen, entsprechend nach rechts beziehungsweise oben und unten für die Vertikale. Zum Höhenausgleich ist die Dicke oder Höhe der ersten Außenwand insgesamt um so viel vermindert oder vergrößert, wie die individuelle Erfassungshöhe nach oben oder unten von einer spezifizierten Erfassungshöhe abweicht.

Die dreidimensionale Kontur des Sensormoduls ist für das Sensormodul festgelegt und nicht für eine weitere Veränderung ausgebildet. Es handelt sich also nicht um Stellschrauben oder dergleichen, sondern die dreidimensionale Kontur ist eine festgelegte Eigenschaft der ersten Außenwand. Natürlich kann dennoch mit entsprechendem Werkzeug auf die dreidimensionale Kontur eingewirkt werden, aber das ist ein zerstörender Fehlgebrauch und damit keine vorgesehene Eigenschaft des Sensormoduls.

Die Erfindung hat den Vorteil, dass die Ausrichtung eines Sensors bei der Installation automatisch gewährleistet ist. Dabei ist der Installationsaufwand verringert, und das Ausrichtergebnis ist garantiert. Individuelle Unterschiede innerhalb einer Produktfamilie sind ausgeglichen, beispielsweise tasten alle Laserscanner einer Produktfamilie eine gleiche Scanebene ab. Verstellbare Justagehalter sind nicht mehr erforderlich. Im Falle eines Sensortauschs bedarf es nicht länger einer neuen Ausrichtung, das neue Gerät nimmt nach dem Prinzip "Plug & Play" die Rolle seines Vorgängers ein.

Das Modulgehäuse ist bevorzugt in einem Sensorgehäuse des Sensors angeordnet, wobei die ebene Grundfläche eine Wand des Sensorgehäuses oder damit fest verbunden ist. Das greift das schon erwähnte Beispiel der Anordnung in einem Umgehäuse auf. Die ebene Grundfläche muss nicht selbst eine Wand des Sensorgehäuses sein, es genügt, wenn sie in fester Lage damit verbunden ist. In dem Umgehäuse können weitere Komponenten des Sensors untergebracht sein, wie Auswertungselektronik, eine Versorgung oder Kommunikationsschnittstellen. Aufgrund der Erfindung kann das Sensormodul als hochgenaue Einheit in dem Umgehäuse und damit dem vollständigen Sensor montiert werden. Der Sensor ist dann in sich ausgerichtet, die einleitend diskutierten Toleranzen sind ausgeglichen.

Das Sensormodul ist alternativ bereits selbst der Sensor, wobei das Modulgehäuse zugleich als Sensorgehäuse fungiert. Das Sensormodul ist in diesem Ausführungsbeispiel mit dem Sensor identisch. Dementsprechend gibt es kein zusätzliches Umgehäuse, obwohl natürlich niemand gehindert ist, einen vollständigen Sensor nochmals in ein Umgehäuse zu stellen. Die erste Außenwand mit ihrer dreidimensionalen Kontur sorgt dafür, dass der Sensor bei Aufstellen auf die ebene Grundfläche oder Montage an der ebenen Grundfläche ausgerichtet ist.

Der Sensor ist bevorzugt ein Laserscanner oder ein Radar mit mindestens einer Scanebene, deren Orientierung durch die Erfassungsrichtung festgelegt ist. In diesem Fall ist die dreidimensionale Kontur sehr intuitiv zu verstehen: Sie reproduziert eine Schieflage der Scanebene in invertierter Form als ebenfalls schiefe Ebene, wobei die dreidimensionale Kontur wie erwähnt nicht vollflächig sein muss. In einem Laserscanner erzeugt, wie einleitend schon skizziert, ein Lichtsender Sendelicht und sendet es in den Überwachungsbereich aus. Das Sendelicht wird als remittiertes Sendelicht wieder empfangen, nachdem es zumindest teilweise im Überwachungsbereich von einem Objekt zurückgeworfen wurde. Bevorzugt ist eine Steuer- und Auswertungseinheit dafür ausgebildet, aus einer Lichtlaufzeit zwischen Aussenden des Sendelichts und Empfangen des Empfangslichts einen Abstand des Objekts zu bestimmen. Mit Hilfe einer beweglichen Ablenkeinheit wird eine Scanbewegung erzeugt, vorzugsweise eine Drehbewegung, mit der das Sendelicht und das Empfangslicht periodisch in unterschiedliche Ablenkwinkel ausgesandt beziehungsweise aus unterschiedlichen Ablenkwinkeln erfasst wird. Dadurch wird die Scanebene abgetastet. Es gibt Mehrlagenscanner, die mehrere Sender-/Empfängerpaare aufweisen und so mehrere Scanebenen abtasten, dann bezieht sich Erfassungsrichtung auf eine ausgewählte der Scanebenen. Ein Radar funktioniert auf dieser abstrakten Beschreibungsebene genauso, wobei statt Licht Radarsignale erzeugt und empfangen werden.

Die erste Außenwand ist bevorzugt in das Modulgehäuse integriert. Die erste Außenwand ist also insgesamt integraler Bestandteil des Modulgehäuses. Ohne die erste Außenwand wäre das Modulgehäuse an dieser Seite offen. Dies ist als Alternative zu einem sogleich vorzustellenden Zwischenstück zu verstehen.

Die erste Außenwand weist eine innere Gehäusewand und ein daran angeordnetes Zwischenstück auf. Das Zwischenstück wird zwischen innerer Gehäusewand und ebener Grundfläche angeordnet. Die innere Gehäusewand ist bevorzugt so ausgebildet wie bei einem herkömmlichen Gehäuse, also eben und von zum übrigen Modulgehäuse gleichmäßiger Dicke. Das Zwischenstück weist dann die dreidimensionale Kontur auf. Alternativ ist denkbar, dass die innere Gehäusewand mit zu der dreidimensionalen Kontur beiträgt.

Das Zwischenstück ist bevorzugt einteilig ausgebildet. Beispielsweise handelt es sich um ein Montageblech. Ein solches Zwischenstück ist kostengünstig herstellbar und einfach zu handhaben.

Das Zwischenstück ist bevorzugt durch mechanische Verschränkung, Form, Einpressen, Magnetkraft, Schrauben, Kleben oder Schweißen mit der inneren Gehäusewand verbunden. Für eine mechanische Verbindung können Haken oder ein Rastmechanismus vorgesehen sein, oder durch Passung entsteht eine formschlüssige Verbindung. Andere Verbindungen, wie durch Magnete, Schrauben, Bolzen, Kleben oder Schweißen sind ebenfalls möglich.

Das Zwischenstück ist mit einer Materialabtragung bearbeitet. Damit wird die dreidimensionale Kontur einem entsprechenden Rohling sozusagen negativ aufgeprägt. Alternativ ist ein additives Verfahren oder ein 3D-Druck vorstellbar, mit dem ein Zwischenstück mit der vorgesehenen dreidimensionalen Kontur hergestellt wird. Mit einem additiven Verfahren kann im Übrigen die dreidimensionale Kontur auch direkt auf die Außenwand gedruckt werden und ist dann damit verbunden. Das kann man wahlweise so verstehen, dass die Außenwand dann die Rolle der Innenwand einnimmt und der Aufdruck diejenige des Zwischenstücks, oder dass die Außenwand samt dreidimensionaler Kontur eine in das Gehäuse integrierte Außenwand ohne Zwischenstück ist.

Bei dem erfindungsgemäßen Verfahren zur Herstellung eines ausgerichteten Sensormoduls für einen Sensor wird zunächst eine Sensoreinheit hergestellt und mit der sich dabei aus Bauteil-, Einbau- oder sonstigen Toleranzen ergebenden individuellen Erfassungsrichtung und Erfassungshöhe in ein Modulgehäuse mit mindestens einer ersten Außenwand eingebaut. Das Gerät wird dann mit der ersten Außenwand an einer ebenen Grundfläche angeordnet, und die individuelle Erfassungsrichtung und/oder die individuelle Erfassungshöhe wird vermessen, um daraus eine Abweichung von einer spezifizierten oder gewünschten Erfassungsrichtung beziehungsweise Erfassungshöhe zu bestimmen. Die erste Außenwand wird dann mit einer dreidimensionalen Kontur versehen, die die Abweichungen ausgleicht.

Das Modulgehäuse wird bevorzugt in einem Sensorgehäuse auf einer Wand des Sensorgehäuses oder einer damit fest verbundenen Bezugsfläche angeordnet, die die ebene Grundfläche bildet. Es entsteht damit ein in sich hochgenau ausgerichteter Sensor. Alternativ ist das Sensormodul bereits der Sensor, und das Modulgehäuse fungiert zugleich als Sensorgehäuse, so dass mit dem Sensormodul bereits der Sensor hergestellt ist.

Die erste Außenwand wird bevorzugt mit dem Modulgehäuse und vollständig als Teil des Modulgehäuses hergestellt. Dabei weist die erste Außenwand insbesondere zunächst einen Materialzuschlag oder Materialüberschuss auf, der dann teilweise entfernt wird, um die dreidimensionale Kontur herzustellen. Der Materialzuschlag muss sich nicht über die gesamte erste Außenwand erstrecken, es können auch lediglich mehrere Säulen, Beinchen oder Stifte vorgesehen sein, die individuell eingekürzt werden, um die dreidimensionale Kontur mit entsprechenden Kontaktpunkten herzustellen.

Das Modulgehäuse wird bevorzugt zunächst mit einer inneren Gehäusewand hergestellt, es wird ein Zwischenstück mit der dreidimensionalen Kontur hergestellt, und das Zwischenstück wird an der inneren Gehäusewand befestigt oder zwischen innerer Gehäusewand und ebener Grundfläche angeordnet, so dass innere Gehäusewand und Zwischenstück gemeinsam die erste Außenwand bilden. Das Zwischenstück kann also wahlweise schon während der Fertigung mit dem Modulgehäuse verbunden oder zunächst lose bleiben und erst am Betriebsort untergelegt oder zwischengelegt werden. Ein Zwischenstück hat den Vorteil, dass der Sensor selbst unverändert bleiben kann und lediglich ein kostengünstiges Zwischenstück ergänzt wird.

Das Zwischenstück wird durch Materialabtragung aus einem Rohling hergestellt. Dabei wird die dreidimensionale Kontur aus dem Rohling herausgearbeitet, beispielsweise einem Montageblech. Alternativ wird das Zwischenstück durch ein additives Verfahren beziehungsweise einen 3D-Druck einschließlich der dreidimensionalen Kontur hergestellt.

Das Zwischenstück wird vorzugsweise mit einer Markierung versehen, aus der die Zugehörigkeit zu dem Sensor hervorgeht. Das ist vor allem in einer Ausführungsform von Nutzen, in der das Zwischenstück zunächst lose bleibt. Durch die Markierung kann auf einfache Weise eine eindeutige Zuordnung des Zwischenstücks zu demjenigen Sensor vorgenommen werden, für den es mit seiner dreidimensionalen Kontur hergestellt wurde. Beispielsweise eignet sich dafür eine Seriennummer des Sensors, die sich ohnehin in aller Regel am Modulgehäuse oder zumindest in den zugehörigen Unterlagen des Sensors befindet. Die Markierung kann direkt auf dem Zwischenstück aufgebracht werden, beispielsweise mit Laserbeschriftung, es ist aber beispielsweise auch ein Druck auf ein Klebeetikett oder dergleichen denkbar.

Das Zwischenstück weist bevorzugt eine Markierung und/oder Strukturierung auf, anhand derer es in der richtigen Orientierung angebracht wird. Das Zwischenstück ist typischerweise nicht symmetrisch, das ist ja gerade dessen Zweck. Es bedarf also im Falle eines zunächst lose bleibenden Zwischenstücks, ebenso bei der Anbringung des Zwischenstücks im Rahmen der Fertigung, einer korrekten Orientierung. Dafür können bestimmte Seiten des Zwischenstücks farbig oder mit Symbolen markiert sein. Denkbar ist auch eine Grundform, die eine eindeutige Orientierung erkennen lässt. Möglich sind auch Strukturierungen auf der vorgesehenen Verbindungsseite des Zwischenstücks und der inneren Gehäusewand in einem Muster, das nur in passender Orientierung zu einem gegenseitigen Eingriff führt. Die Markierung beziehungsweise Strukturierung kann bereits der Rohling tragen, sie muss im Gegensatz zu der Markierung des Vorabsatzes nicht individuell sein. Vielmehr wird die dreidimensionale Kontur dann passend zur vorgegebenen Orientierung hergestellt.

Zu weiteren möglichen Herstellungsschritten und den Vorteilen, die sich aus dem dadurch hergestellten Sensor ergeben, wird ergänzend auf die Ausführungen zu dem erfindungsgemäßen Sensor verwiesen.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines Laserscanners;
- Fig. 2: eine schematische Darstellung eines Laserscanners mit Veranschaulichung verschiedener möglicher Scanebenen aufgrund von Fertigungstoleranzen;
- Fig. 3: eine schematische Darstellung zweier Laserscanner jeweils mit einem individuellen Zwischenstück zum Ausgleich der sich durch Fertigungstoleranzen ergebenden Fehlausrichtungen;
- Fig. 4: eine Draufsicht auf ein beispielhaftes ausgleichendes Zwischenstück;
- Fig. 5: eine Seitenansicht zu Figur 4;
- Fig. 6: eine Draufsicht auf ein beispielhaftes mehrteiliges ausgleichendes Zwischenstück;
- Fig. 7: eine Seitenansicht zu Figur 6;
- Fig. 8: eine Draufsicht auf ein weiteres mehrteiliges ausgleichendes Zwischenstück;
- Fig. 9: eine schematische Darstellung zweier Laserscanner mit individuellen Fertigungstoleranzen in einer Ausgangssituation mit langen, noch nicht angepassten Beinchen;
- Fig. 10: eine Darstellung entsprechend Figur 9 mit einer jeweiligen die individuellen Fertigungstoleranzen ausgleichenden Ausrichtung der beiden Laserscanner;
- Fig. 11: eine Darstellung entsprechend Figur 10 der beiden Laserscanner mit entsprechend der erforderlichen ausgleichenden Ausrichtung individuell eingekürzten Beinchen;
- Fig. 12: eine schematische Darstellung eines Laserscanners mit Stiften, die zum Ausrichten unterschiedlich tief eingepresst sind;
- Fig. 13: eine Detailansicht der Figur 12 des Bereichs mit einem eingepressten Stift;
- Fig. 14: eine schematische Darstellung eines Laserscanners mit Gewindebuchsen, die zum Ausrichten unterschiedlich tief eingepresst sind; und
- Fig. 15: eine Detailansicht der Figur 14 des Bereichs mit einer eingepressten Gewindebuchse.

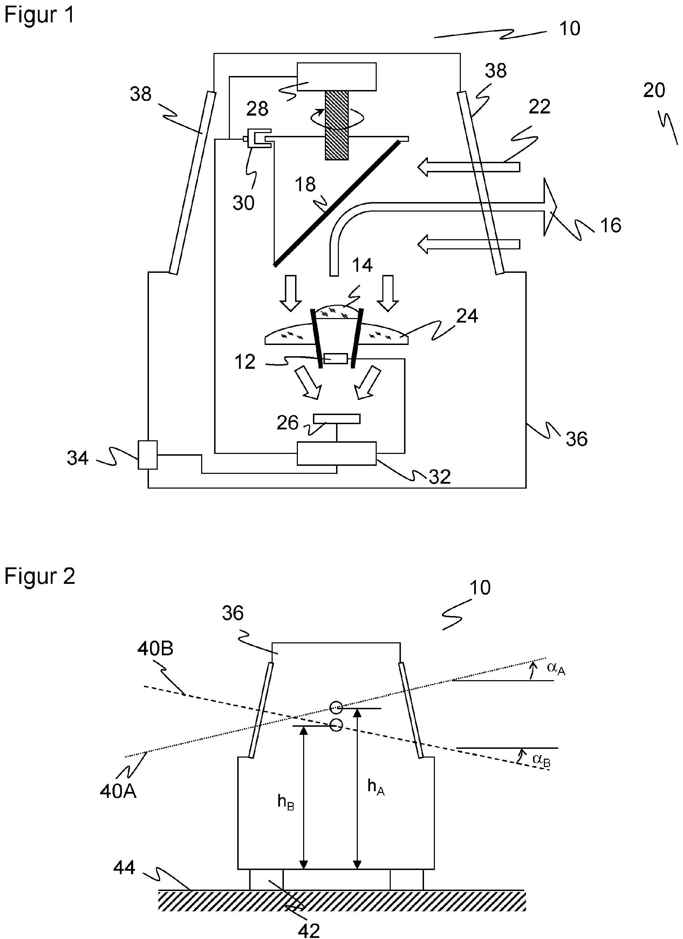

Figur 1 zeigt eine schematische Schnittdarstellung durch einen Laserscanner 10. Ein Lichtsender 12, beispielsweise mit einer Laserlichtquelle, erzeugt mit Hilfe einer Sendeoptik 14 einen Sendelichtstrahl 16. Der Sendelichtstrahl 16 wird mittels einer Ablenkeinheit 18 in einen Überwachungsbereich 20 ausgesandt. Zur Vermeidung optischen Übersprechens kann der Sendelichtstrahl 16 zumindest teilweise von einem nicht gezeigten Sendetubus umgeben sein.

Im Überwachungsbereich 20 wird der Sendelichtstrahl 16 von einem gegebenenfalls vorhandenen Objekt remittiert. Das entsprechende Empfangslicht 22 gelangt wieder zu dem Laserscanner 10 zurück und wird über die Ablenkeinheit 18 mittels einer Empfangsoptik 24 von einem Lichtempfänger 26 detektiert. Die Empfangsoptik 24 ist vorzugsweise eine einzelne Sammellinse, es können aber weitere Linsen und sonstige optische Elemente hinzukommen. Der Lichtempfänger 26 weist beispielsweise mindestens eine Photodiode oder für höhere Empfindlichkeit eine Lawinenphotodiode (APD) beziehungsweise eine Anordnung mit mindestens einer Einzelphotonlawinendiode (SPAD, SiPM) auf.

Die Ablenkeinheit 18 wird von einem Motor 28 in eine kontinuierliche Drehbewegung mit einer Scanfrequenz versetzt. Dadurch tastet der Sendelichtstrahl 16 während jeder Scanperiode, also einer vollständigen Umdrehung bei der Scanfrequenz, eine Ebene ab. Am Außenumfang der Ablenkeinheit 18 ist eine Winkelmesseinheit 30 angeordnet, um die jeweilige Winkelstellung der Ablenkeinheit 18 zu erfassen. Die Winkelmesseinheit 30 wird hier beispielhaft von einer Strichscheibe als Winkelmaßverkörperung und einer Gabellichtschranke als Abtastung gebildet.

Eine Steuer- und Auswertungseinheit 32 ist mit dem Lichtsender 12, dem Lichtempfänger 26, dem Motor 28 und der Winkelmesseinheit 30 verbunden. Durch Bestimmen der Lichtlaufzeit zwischen Aussenden des Sendelichtstrahls 16 und Empfang von remittiertem Empfangslicht 22 wird unter Verwendung der Lichtgeschwindigkeit auf die Entfernung eines angetasteten Objektes von dem Laserscanner 10 geschlossen. Die jeweilige Winkelstellung, unter welcher dabei der Sendelichtstrahl 16 ausgesandt wurde, ist der Auswertungseinheit von der Winkelmesseinheit 30 bekannt.

Somit stehen nach jeder Scanperiode über den Winkel und die Entfernung zweidimensionale Polarkoordinaten der Objektpunkte in dem Überwachungsbereich 20 zur Verfügung, und entsprechende Messdaten können über eine Schnittstelle 34 übertragen werden. Die Schnittstelle 34 kann umgekehrt für eine Parametrierung oder sonstigen Datenaustausch zwischen Laserscanner 10 und Außenwelt genutzt werden. Die Schnittstelle 34 kann für die Kommunikation in einem oder mehreren herkömmlichen Protokollen ausgelegt sein, wie IO-Link, Ethernet, Profibus, USB3, Bluetooth, WLAN, LTE, 5G und vielen weiteren. Bei Anwendungen in der Sicherheitstechnik kann die Schnittstelle 34 sicher ausgebildet, insbesondere ein sicherer Ausgang (OSSD, Output Signal Switching Device) für ein sicherheitsgerichtetes Abschaltsignal bei Erkennen einer Schutzfeldverletzung sein. Der Laserscanner 10 ist in einem Gehäuse 36 untergebracht, welches eine umlaufende Frontscheibe 38 aufweist.

Bei dem dargestellten Laserscanner 10 befindet sich der Lichtsender 12 und dessen Sendeoptik 14 in einer zentralen Öffnung der Empfangsoptik 24. Dies ist nur eine beispielhafte Möglichkeit der Anordnung. Die Erfindung umfasst daneben alternative koaxiale Lösungen, etwa mit einem eigenen Spiegelbereich für den Sendelichtstrahl 16 oder mit Teilerspiegeln, und auch biaxiale Anordnungen. Weiterhin kann der Laserscanner 10 als Ablenkeinheit anstelle eines Drehspiegels einen drehenden Messkopf verwenden, in dem Lichtsender 12 und/oder Lichtempfänger 26 rotieren. Nochmals andere Bauformen eines Laserscanners 10 tasten nicht nur eine einzige Scanebene ab, sondern sind mehrstrahlig und damit als Mehrlagenscanner ausgebildet. Für die sogleich zu erläuternde Ausrichtung wird dann eine der mehreren Scanebenen herangezogen, insbesondere soweit vorhanden eine zentrale Scanebene. Ein Mehrlagenscanner weist mehrere in Elevation zueinander versetzt wirkende Sender-/Empfängerpaare auf, wobei mehrere Lichtstrahlen beispielsweise mittels Strahlteilern oder als VCSEL-Array von einer Lichtquelle erzeugt und/oder in einem Matrix- oder speziell SPAD-Array empfangen werden können.

Die Erfindung wird stellvertretend anhand eines Laserscanners 10 beschrieben. Sie umfasst aber auch andere optoelektronische Sensoren, beispielsweise einen Lichttaster, dessen Abtaststrahl auszurichten ist, ein Lichtgitter mit einer Vielzahl zueinander paralleler Erfassungsstrahlen oder eine 2D- beziehungsweise 3D-Kamera mit Ausrichtung ihres Sichtfeldes. Ferner sind Sensoren umfasst, die kein optisches Sensorprinzip verwenden. Dabei ist zunächst ein Radar zu erwähnen, das ebenfalls eine Scanebene abtastet, auch wenn diese womöglich in Elevation etwas weniger scharf abgegrenzt ist. Weitere nicht abschließend genannte Sensoren sind Ultraschallsensoren, kapazitive, induktive oder magnetische Sensoren, die alle je nach Bauform und Anwendung einer mehr oder weniger präzisen Ausrichtung bedürfen. Der erfindungsgemäße Sensor kann als Sicherheitssensor im Sinne der einleitend genannten Normen ausgebildet sein, insbesondere als Sicherheitslaserscanner, und in der Sicherheitstechnik zur Unfallvermeidung beispielsweise durch Überwachung von Schutzfeldern oder Bewertung von Abstand und Geschwindigkeit eines Objekts im Umfeld einer Gefahrenquelle (Speed-and-Separation) eingesetzt sein.

Der Laserscanner 10 der Figur 1 ist ein vollständiger Sensor, und an diesem Beispiel wird im Folgenden die Ausrichtung mit dessen Gehäuse 36 gegenüber Außen, insbesondere einer Aufstellfläche, Wand oder dergleichen erläutert. Die Erfindung kann zudem so angewandt werden, dass damit ein Sensormodul wie beispielsweise eine Empfängerbaugruppe oder eine Sende-Empfängerbaugruppe hochgenau ausgerichtet in einem Sensorgehäuse montiert wird. Die Bezugsfläche ist dann nicht außen, sondern eine Wand oder eine damit verbundene Referenzfläche des Sensorgehäuses. Das Ausrichtprinzip in allen Varianten ist das gleiche, somit analog übertragbar, und wird deshalb nicht eigens beschrieben.

Figur 2 zeigt eine schematische Darstellung eines Laserscanners 10 mit Veranschaulichung zweier verschiedener Scanebenen 40A-B aufgrund von Fertigungstoleranzen. Von einem Laserscanner 10 werden im Folgenden nur noch die Außenkonturen gezeigt, für die weiteren Elemente wird auf die Erläuterungen zu Figur 1 verwiesen. Der Laserscanner 10 ist mit einer ersten Außenwand 42 an einer ebenen Grundfläche 44 angeordnet. In Figur 2 ist das so dargestellt, dass der Laserscanner 10 mit seiner Unterseite auf dem Boden steht. Es kann ebenso eine beliebige andere Seite des Laserscanners 10 an einer beliebig anders orientierten Grundfläche 44 angeordnet sein, beispielsweise bei Montage mit der Unterseite an der Wand oder mit der Oberseite an der Decke. Mit erster Außenwand 42 ist diejenige gemeint, die in Kontakt mit der ebenen Grundfläche 44 kommt.

Die Scanebene 40A-B verläuft in jedem Laserscanner 10 als Folge von Bauteil-, Einbau- oder sonstigen Toleranzen etwas anders, wobei Figur 2 dies deutlich übertrieben darstellt. Dies wird durch zwei Größen erfasst. Das ist zum einen die Orientierung, die durch eine Erfassungsrichtung charakterisiert wird. Denn die Neigung der Scanebene 40A-B ergibt sich aus der Abstrahlrichtung des Sendelichtstrahls 16. Dies wird beispielsweise als Winkel α_{A}, α_{B} zur Grundebene 44 angegeben. Zum anderen ist es eine Erfassungshöhe h_{A}, _{hB}, die vom Lichtaustrittsbereich gegen eine Referenz wie den unteren Geräteabschluss gemessen wird. Der Begriff Höhe lehnt sich an die in Figur 2 gezeigte aufrechte Orientierung an, bei vertikaler Montage ist es ein seitlicher Abstand, entsprechend bei beliebiger Neigung der ebenen Grundfläche 44, und all dies wird vereinfachend Höhe genannt. Die Erfassungsrichtung und Erfassungshöhe variiert unter Laserscannern 10 gleicher Bauform, durch Toleranzen werden es eine individuelle Erfassungsrichtung und eine individuelle Erfassungshöhe. Diese Abweichungen erfordern eine Ausrichtung und sind nicht erwünscht, können aber aus Kostengründen nicht an der Quelle durch Reduzieren von Toleranzen vermieden werden.

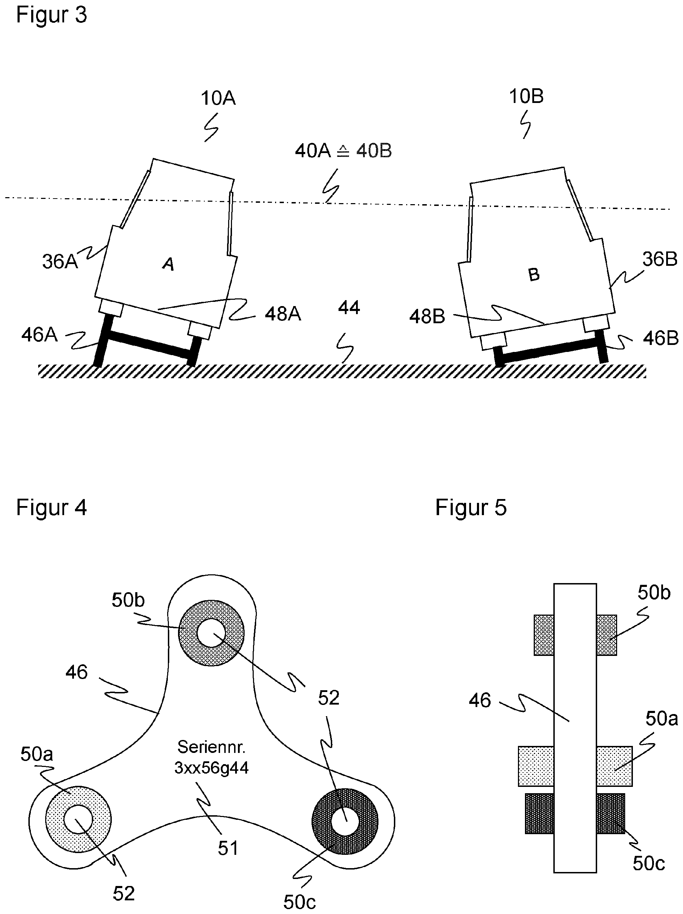

Figur 3 zeigt eine schematische Darstellung zweier Laserscanner 10A-B jeweils mit einem individuellen Zwischenstück 46A-B zum Ausgleich der sich durch Fertigungstoleranzen ergebenden Fehlausrichtungen in Erfassungsrichtung und/oder Erfassungshöhe. Für jeden der Laserscanner 10a-b wird individuell ein Zwischenstück 46A-B gefertigt, beispielsweise ein Zwischenblech, das die Neigung und den Höhenversatz der Scanebenen 40A-B ausgleicht. Dadurch entsprechen nun die beiden Scanebenen 40A-B einander: Sie liegen auf gleicher Erfassungshöhe und haben die gleiche, hier horizontale Erfassungsrichtung. Das Zwischenstück 46A-B bildet gemeinsam mit der eigentlichen, inneren Gehäusewand 48A-B die erste Außenwand 42. Dabei hat dank des Zwischenstücks 46A-B die erste Außenwand nun eine dreidimensionale Kontur, mit der die individuelle Fehlausrichtung der jeweiligen Laserscanner 10A-B in Erfassungsrichtung und/oder Erfassungshöhe individuell ausgeglichen ist.

Um zu einem passenden Zwischenstück 46A-B zu kommen, wird für jeden individuellen Laserscanner 10A-B, d.h. zu jeder einzelnen Seriennummer, die Orientierung der Scanebene 40A-B und/oder die Höhe des Lichtaustritts gemessen, also die individuelle Erfassungsrichtung beziehungsweise individuelle Erfassungshöhe. Dies geschieht beispielsweise während der Endfertigung. Es kann sich zufällig ergeben, dass die Toleranzen sich für einen gerade vermessenen individuellen Laserscanner 10A-B so wenig ausgewirkt haben, dass eine verbesserte Ausrichtung nicht erforderlich ist. Ansonsten wird bei Bedarf das passende Zwischenstück 46A-B individuell gefertigt. Das Zwischenstück 46 kann durch Abtragung von Material aus einem Rohling hergestellt werden. Eine andere Möglichkeit ist ein additives Verfahren wie ein 3D-Druck.

Durch Anordnung des Zwischenstücks 46 zwischen innerer Gehäusewand 48A-B und ebener Grundfläche 44 erfolgt eine individuelle Anpassung oder Ausrichtung. Alle Laserscanner 10A-B einer Produktfamilie können auf diese Weise auf eine gleiche Erfassungsrichtung und/oder Erfassungshöhe gebracht werden. Absichtlich oder unabsichtlich manipulierbar ist diese Ausrichtung im Gegensatz beispielsweise zu Einstellschrauben oder höhenverstellbaren Füßchen nicht mehr. Das Zwischenstück 46 kann zunächst lose bleiben und erst bei der Montage zwischengelegt werden, oder es wird schon vorab, erneut insbesondere während der Endfertigung, an dem Laserscanner 10 befestigt. Dafür sind beliebige Befestigungen vorstellbar, wie Haken, Magnetkraft, Schrauben, Passung, Kleben, Pressen oder (Laser-)schweißen.

Die Figur 4 zeigt in einer Draufsicht und die Figur 5 zeigt in einer Seitenansicht ein beispielhaftes Zwischenstück 46 mit ausgleichender dreidimensionaler Kontur. Um eine eindeutige Ausrichtung vorzugeben, genügen nach dem Dreibeinprinzip drei Kontakt oder Auflagepunkte 50a-c. In anderen Ausführungsformen kann es dennoch weitere Kontaktpunkte, Kontaktflächen oder einen vollflächigen Kontakt geben. Auch in Figur 4 sind die Auflagepunkte 50a-c zu kleinen Flächen verbreitert, und in deren Innerem ist Platz für eine jeweilige Schraubenbohrung 52 zur Befestigung des Laserscanners 10 an der ebenen Grundfläche 44 mittels Schrauben. In Figur 5 sind die unterschiedlichen Höhen der Auflagepunkte 50a-c zu erkennen, die dem Zwischenstück 46 die erforderliche dreidimensionale Kontur geben.

Das Zwischenstück 46 ist an die individuell vermessene Erfassungsrichtung und/oder Erfassungshöhe angepasst. Daher ist eine eindeutige Zuordnung des Zwischenstücks 46 zu dem zugehörigen Laserscanner 10 erforderlich. Um dies zu erleichtern, kann das Zwischenstück 46 mit einer ausreichend eindeutigen Identitätskennung markiert werden, beispielsweise einer durch Laserbeschriftung aufgebrachten Seriennummer 51. Außerdem haben die Auflagepunkte 50a-c in aller Regel unterschiedliche Höhen, so dass es auf die richtige Orientierung des Zwischenstücks 46 ankommt. Dies kann durch Formgebung sichergestellt werden, alternativ durch weitere Markierungen, Farben oder Strukturierungen. Für eine Vorgabe der Orientierung ist keine Individualisierung erforderlich, vielmehr kann umgekehrt die dreidimensionale Kontur für eine bestimmte Orientierung angebracht werden. Deshalb können Vorgaben für die richtige Orientierung für alle Zwischenstücke 46 gleich und beispielsweise schon auf einem Rohling vor Anbringen der dreidimensionalen Kontur vorgesehen sein.

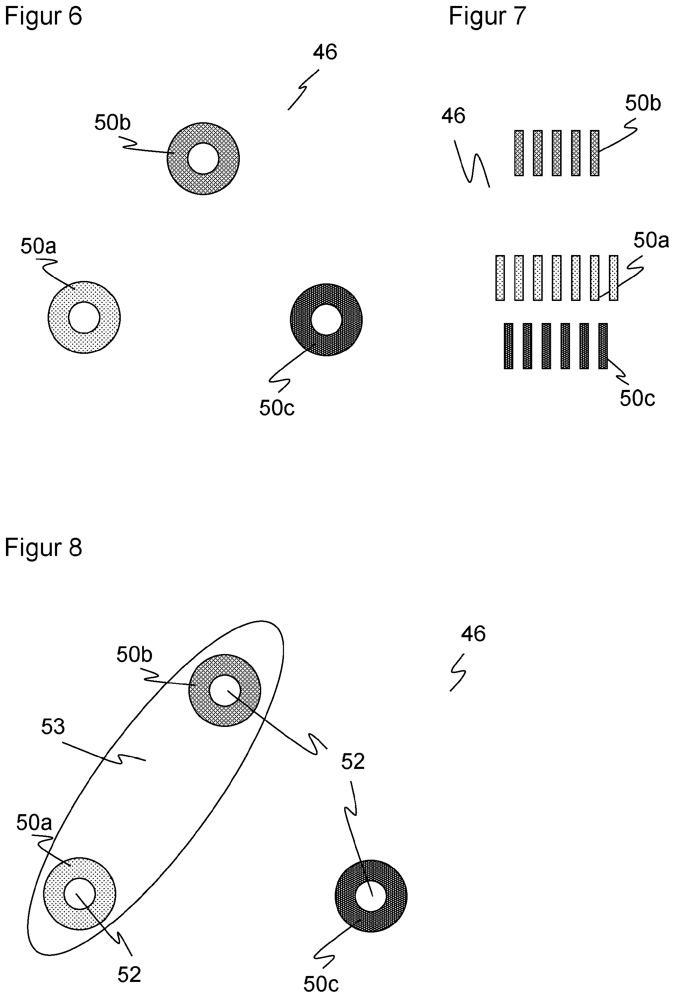

Figur 6 zeigt in einer Draufsicht und Figur 7 zeigt in einer Seitenansicht ein alternatives mehrteiliges Zwischenstück 46. Im Prinzip sind das die Auflagepunkte 50a-c der Figuren 4 bis 5, jedoch ohne verbindendes Material für ein gemeinsames Zwischenstück 46. Ein solches Zwischenstück 46 verbraucht weniger Material. Es wäre in einer nicht beanspruchten Variante auch möglich, Teile des mehrteiligen Zwischenstücks 46 unterschiedlicher Höhe zu bevorraten und passend auszuwählen, oder sie wie in Figur 7 angedeutet aus gleichartigen Teilen zusammenzusetzen. Das alles sind prinzipielle Möglichkeiten für die individuelle Ausrichtung. Jedoch ist die Montage erschwert, weil mehr Teile verbaut werden müssen, und vor allem ist sicherzustellen, dass nicht nur der richtige Teilesatz zum richtigen Laserscanner 10 gelangt, sondern jedes Teil auch an seinem vorgesehenen Platz an dem Laserscanner 10. Um die Verwechslungsgefahr wenigstens durch kontrollierte Bedingungen und qualifiziertes Personal zu begrenzen, sollte ein mehrteiliges Zwischenstück 46 an dem Laserscanner 10 befestigt werden, ehe der Laserscanner 10 an den Betriebsort ausgeliefert wird. Ein Anordnen eines losen mehrteiligen Zwischenstücks 46 zwischen erster Außenwand 42 und ebener Grundfläche 44 erst während der Montage erhöht das Risiko einer Verwechslung weiter.

Figur 8 zeigt eine Draufsicht auf ein weiteres mehrteiliges ausgleichendes Zwischenstück 46. Hier sind zwei Auflagepunkte 50a-b auf einem gemeinsamen Bauteil 53 zusammengesetzt, nur der dritte Auflagepunkt 50c bildet ein eigenes Bauteil. Das ist eine Mischform, in der die Vor- und Nachteile eines gemeinsamen Bauteils gemäß den Figuren 4 und 5 und eines mehrteiligen Bauteils gemäß den Figuren 6 und 7 in jeweils schwächerer Form zutage treten.

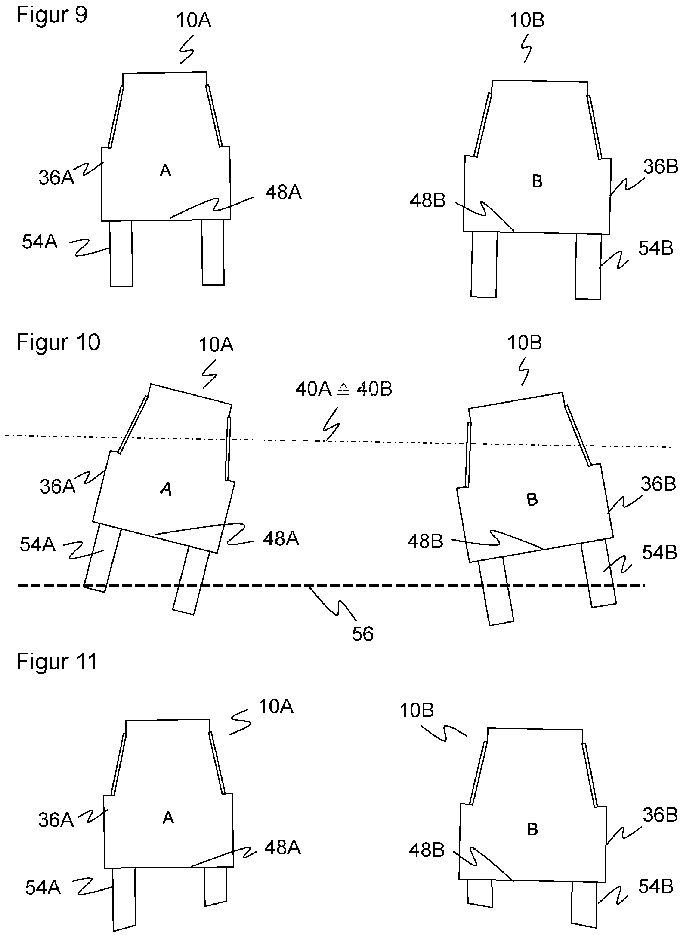

Die Figuren 9 bis 11 zeigen eine weitere Ausführungsform der Ausrichtung eines Laserscanners 10 durch eine individuelle ausgleichende dreidimensionale Kontur. Im Ausgangszustand der Figur 9 sind an der inneren Gehäusewand 48A-B Beinchen 54A-B mit Übermaß oder Überlänge und damit einer Art Materialreserve angebracht. Diese Beinchen 54A-B sind folglich schon anfangs beziehungsweise in einer frühen Phase der Herstellung vor der individuellen Anpassung mit dem Laserscanner 10 fest verbunden. Die erste Außenwand 42 wird in dieser Ausführungsform von der inneren Gehäusewand 48A-B und den Beinchen 54A-B gebildet.

Es werden dann, wie schon beschrieben, beispielsweise während der Endfertigung die individuelle Erfassungsrichtung und/oder individuelle Erfassungshöhe vermessen. Daraus ergeben sich die in Figur 10 gezeigten Neigungen und Höhenverschiebungen, die zum Ausrichten benötigt werden. Nun werden die Beinchen 54A-B in einer mechanischen Nacharbeit entsprechend der gezeigten Trennebene 56 gekürzt, beispielsweise durch ein spanendes Verfahren oder Laserabtragung. Die Trennebene 56 ist lediglich eine Veranschaulichung der erforderlichen Kürzung und damit der zu erreichenden dreidimensionalen Kontur. Nach dieser Kürzung der Beinchen 54A-b werden die Laserscanner 10A-B am Betriebsort bezüglich einer ebenen Grundfläche 44 entsprechend der Trennebene 56 die geforderte Ausrichtung einnehmen. Figur 11 zeigt die beiden Laserscanner 10A-B nochmals abschließend in dem damit erreichten Auslieferungszustand. Ein Zwischenstück 46 ist in dieser Ausführungsform nicht erforderlich.

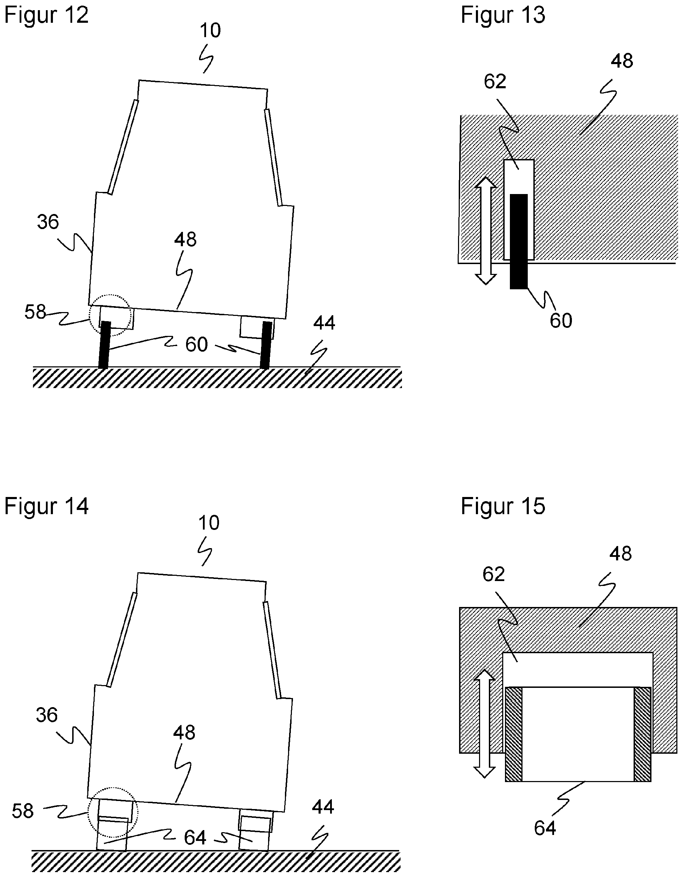

Die Figur 12 illustriert eine nicht beanspruchte Ausführungsform der Ausrichtung, wobei Figur 13 eine Detailansicht des in Figur 12 mit dem Kreis 58 bezeichneten Ausschnitts ist. Hier wird die dreidimensionale Kontur mit Auflagepunkten unterschiedlicher Höhe dadurch erreicht, dass Stifte 60 verschieden tief in eine Ausnehmung 62 der inneren Gehäusewand 48 eingepresst werden. Die Stifte 60 haben vorzugsweise ursprünglich die gleiche Länge, können also untereinander gleichartig sein, wobei alternativ auch Stifte unterschiedlicher Länge verwendet werden können. Je nach Materialien und Kraft des Einpressens kann auf die Ausnehmung 62 verzichtet werden. Die Stifte 60 können in der richtigen Tiefe zusätzlich fixiert werden, beispielsweise durch Kleben oder Schweißen.

Figur 14 illustriert eine nicht beanspruchte ganz ähnliche Ausführungsform der Ausrichtung, wobei Figur 15 eine Detailansicht des in Figur 14 mit dem Kreis 58 bezeichneten Ausschnitts ist. Anstelle von Stiften 60 sind hier Gewindebuchsen 64 verschieden tief in die innere Gehäusewand 48 eingepresst. Damit wird auch illustriert, dass Stifte 60 ebenso wie Gewindebuchsen 64 nur als Beispiele für Elemente dienen, die verschieden tief eingebracht werden können, um effektiv unterschiedliche Höhen der Auflagepunkte zu ergeben.

## Patentansprüche

1. Sensormodul (10) für einen Sensor, insbesondere optoelektronisches Sensormodul für einen optoelektronischen Sensor, das eine Sensoreinheit mit einer Erfassungsrichtung und Erfassungshöhe sowie ein Modulgehäuse (36) mit mindestens einer ersten Außenwand (42) zum Anordnen an einer ebenen Grundfläche (44) aufweist, wodurch dann eine Orientierung und Höhenposition des Modulgehäuses (36) und damit die Erfassungsrichtung und Erfassungshöhe der Sensoreinheit festgelegt sind, wobei die erste Außenwand (42) eine dreidimensionale Kontur aufweist, die an die individuelle Erfassungsrichtung und/oder Erfassungshöhe der Sensoreinheit angepasst ist und mit der dreidimensionalen Kontur bei Anordnung der ersten Außenwand (42) an einer ebenen Grundfläche (44) Toleranzen der Sensoreinheit in Erfassungsrichtung und/oder Erfassungshöhe ausgeglichen sind,
**dadurch gekennzeichnet,**
**dass** die erste Außenwand (42) eine innere Gehäusewand (48) und ein daran angeordnetes Zwischenstück (46) aufweist, insbesondere ein Zwischenblech, das individuell durch Abtragung von Material aus einem Rohling oder durch ein additives Verfahren wie 3D-Druck gefertigt ist und die individuell für das Sensormodul (10) gemessenen Fehlausrichtungen in Erfassungsrichtung und Erfassungshöhe ausgleicht.

2. Sensormodul (10) nach Anspruch 1,
wobei das Modulgehäuse (36) in einem Sensorgehäuse des Sensors angeordnet und wobei die ebene Grundfläche (44) eine Wand des Sensorgehäuses oder damit fest verbunden ist.

3. Sensormodul (10) nach Anspruch 1,
wobei das Sensormodul (10) der Sensor ist und das Modulgehäuse (36) zugleich als Sensorgehäuse fungiert.

4. Sensormodul (10) nach einem der vorhergehenden Ansprüche,
wobei der Sensor ein Laserscanner oder ein Radar mit mindestens einer Scanebene (40A-B) ist, deren Orientierung durch die Erfassungsrichtung festgelegt ist.

5. Sensormodul (10) nach einem der vorhergehenden Ansprüche,
wobei das Zwischenstück (46) einteilig ausgebildet ist.

6. Verfahren zur Herstellung eines ausgerichteten Sensormoduls (10) für einen Sensor, insbesondere eines Sensormoduls (10) nach einem der vorhergehenden Ansprüche, bei dem eine Sensoreinheit hergestellt und mit einer individuellen Erfassungsrichtung und Erfassungshöhe in ein Modulgehäuse (36) mit mindestens einer ersten Außenwand (42) eingebaut wird, wobei die individuelle Erfassungsrichtung und/oder die individuelle Erfassungshöhe bei Anordnung des Modulgehäuses (36) mit der ersten Außenwand (42) an einer ebenen Grundfläche (42) vermessen werden, daraus eine Abweichung der individuellen Erfassungsrichtung von einer gewünschten Erfassungsrichtung und/oder der individuellen Erfassungshöhe von einer gewünschten Erfassungshöhe bestimmt wird und die erste Außenwand (42) mit einer dreidimensionalen Kontur versehen wird, die die Abweichungen ausgleicht,
**dadurch gekennzeichnet,**
**dass** das Modulgehäuse (36) zunächst mit einer inneren Gehäusewand (48) hergestellt wird, ein Zwischenstück (46) durch Materialabtragung aus einem Rohling hergestellt wird oder wobei das Zwischenstück (46) durch ein additives Verfahren hergestellt wird, das die individuell für das Sensormodul (10) gemessenen Fehlausrichtungen in Erfassungsrichtung und Erfassungshöhe ausgleicht und das Zwischenstück (46) an der inneren Gehäusewand (48) befestigt oder zwischen innerer Gehäusewand (48) und ebener Grundfläche (44) angeordnet wird, so dass innere Gehäusewand (48) und Zwischenstück (46) gemeinsam die erste Außenwand (42) bilden.

7. Verfahren nach Anspruch 6,
wobei das Modulgehäuse (36) in einem Sensorgehäuse an einer Wand des Sensorgehäuses oder einer damit fest verbundenen Bezugsfläche angeordnet wird, die die ebene Grundfläche (42) bildet,
oder wobei das Sensormodul (10) der Sensor ist und das Modulgehäuse (36) zugleich als Sensorgehäuse fungiert, so dass mit dem Sensormodul bereits der Sensor hergestellt ist.

8. Verfahren nach Anspruch 6 oder 7,
wobei das Zwischenstück (46) mit einer Markierung (51) versehen wird, aus der die Zugehörigkeit zu dem Sensor (10) hervorgeht
und/oder wobei das Zwischenstück (46) eine Markierung und/oder Strukturierung aufweist, anhand derer es in der richtigen Orientierung angebracht wird.

## Claims

1. A sensor module (10) for a sensor, in particular an optoelectronic sensor module for an optoelectronic sensor, said sensor module (10) having a sensor unit, comprising a detection direction and a detection height, and a module housing (36) comprising at least a first outer wall (42) for arrangement at a planar base surface (44), whereby an orientation and a height position of the module housing (36) and thus the detection direction and detection height of the sensor unit are then defined, wherein the first outer wall (42) has a three-dimensional contour which is adapted to the individual detection direction and/or detection height of the sensor unit and tolerances of the sensor unit in the detection direction and/or detection height are compensated with the three-dimensional contour on an arrangement of the first outer wall (42) at a planar base surface (44),
**characterized in that**
the first outer wall (42) has an inner housing wall (48) and an intermediate piece (46) arranged thereat, in particular an intermediate metal sheet, which intermediate piece (46) is manufactured individually by removing material from a blank or by an additive process such as 3D printing and compensates for the misalignments, measured individually for the sensor module (10), in the detection direction and the detection height.

2. A sensor module (10) according to claim 1,
wherein the module housing (36) is arranged in a sensor housing of the sensor and wherein the planar base surface (44) is a wall of the sensor housing or is fixedly connected thereto.

3. A sensor module (10) according to claim 1,
wherein the sensor module (10) is the sensor and the module housing (36) simultaneously functions as the sensor housing.

4. A sensor module (10) according to any one of the preceding claims,
wherein the sensor is a laser scanner or a radar having at least one scanning plane (40A-B) whose orientation is defined by the detection direction.

5. A sensor module (10) according to any one of the preceding claims,
wherein the intermediate piece (46) is formed in one part.

6. A method for producing an aligned sensor module (10) for a sensor, in particular a sensor module (10) according to any one of the preceding claims, in which a sensor unit is produced and is installed with an individual detection direction and detection height into a module housing (36) comprising at least a first outer wall (42), wherein the individual detection direction and/or the individual detection height is/are measured on an arrangement of the module housing (36) with the first outer wall (42) at a planar base surface (42), a deviation of the individual detection direction from a desired detection direction and/or of the individual detection height from a desired detection height is determined therefrom, and the first outer wall (42) is provided with a three-dimensional contour which compensates for the deviations,
**characterized in that**
the module housing (36) is first produced with an inner housing wall (48), an intermediate piece (46) is produced by a material removal from a blank or wherein the intermediate piece (46) is produced by an additive process, which compensates for the misalignments, measured individually for the sensor module (10), in the detection direction and the detection height, and the intermediate piece (46) is fastened to the inner housing wall (48) or is arranged between the inner housing wall (48) and the planar base surface (44) so that the inner housing wall (48) and the intermediate piece (46) together form the first outer wall (42).

7. A method according to claim 6,
wherein the module housing (36) is arranged in a sensor housing at a wall of the sensor housing or at a reference surface which is fixedly connected thereto and which forms the planar base surface (42),
or wherein the sensor module (10) is the sensor and the module housing (36) simultaneously functions as the sensor housing so that the sensor is already produced with the sensor module.

8. A method according to claim 6 or 7,
wherein the intermediate piece (46) is provided with a marking (51), from which the affiliation to the sensor (10) is apparent,
and/or wherein the intermediate piece (46) has a marking and/or a structuring, based on which said intermediate piece (46) is attached in the correct orientation.

## Revendications

1. Module capteur (10) pour un capteur, en particulier module capteur optoélectronique pour un capteur optoélectronique, comprenant une unité de détection présentant une direction de détection et une hauteur de détection, ainsi qu'un boîtier de module (36) ayant au moins une première paroi extérieure (42) destinée à être agencée sur une surface de base plane (44), moyennant quoi une orientation et une position en hauteur du boîtier de module (36) et, par conséquent, la direction de détection et la hauteur de détection de l'unité de détection sont alors fixées,
dans lequel
la première paroi extérieure (42) présente un contour tridimensionnel adapté à la direction de détection et/ou à la hauteur de détection individuelles de l'unité de détection, et
lorsque la première paroi extérieure (42) est agencée sur une surface de base plane (44), les tolérances de l'unité de détection dans la direction de détection et/ou dans la hauteur de détection sont compensées par le contour tridimensionnel,
**caractérisé en ce que**
la première paroi extérieure (42) comprend une paroi de boîtier intérieure (48) et une pièce intermédiaire (46), en particulier une tôle intermédiaire, qui est agencée sur celle-ci et qui est fabriquée individuellement par enlèvement de matière dans une ébauche ou par un procédé de fabrication additive, tel que l'impression 3D, et qui compense les orientations erronés, mesurées pour le module capteur (10), dans la direction de détection et dans la hauteur de détection.

2. Module capteur (10) selon la revendication 1,
dans lequel le boîtier de module (36) est agencé dans un boîtier de capteur du capteur, et la surface de base plane (44) est une paroi du boîtier de capteur ou en est solidaire.

3. Module capteur (10) selon la revendication 1,
dans lequel le module capteur (10) est le capteur et le boîtier de module (36) fait simultanément office de boîtier de capteur.

4. Module capteur (10) selon l'une des revendications précédentes,
dans lequel le capteur est un scanner laser ou un radar ayant au moins un plan de balayage (40A-B) dont l'orientation est fixée par la direction de détection.

5. Module capteur (10) selon l'une des revendications précédentes,
dans lequel la pièce intermédiaire (46) est réalisée d'un seul tenant.

6. Procédé de fabrication d'un module capteur orienté (10) pour un capteur, en particulier d'un module capteur (10) selon l'une des revendications précédentes,
dans lequel une unité de détection est fabriquée et installée avec une direction de détection et une hauteur de détection individuelles dans un boîtier de module (36) ayant au moins une première paroi extérieure (42),
lorsque le boîtier de module (36) est agencé avec la première paroi extérieure (42) sur une surface de base plane (42), la direction de détection individuelle et/ou la hauteur de détection individuelle sont mesurées, ce qui permet de déterminer un écart de la direction de détection individuelle par rapport à une direction de détection souhaitée et/ou un écart de la hauteur de détection individuelle par rapport à une hauteur de détection souhaitée, et
la première paroi extérieure (42) est munie d'un contour tridimensionnel qui compense les écarts,
**caractérisé en ce que**
le boîtier de module (36) est d'abord fabriqué avec une paroi de boîtier intérieure (48), puis une pièce intermédiaire (46) est fabriquée par enlèvement de matière dans une ébauche, ou la pièce intermédiaire (46) est fabriquée par un procédé de fabrication additive, laquelle compense les orientations erronées, mesurées individuellement pour le module capteur (10), dans la direction de détection et dans la hauteur de détection, et la pièce intermédiaire (46) est fixée à la paroi de boîtier intérieure (48) ou est agencée entre la paroi de boîtier intérieure (48) et la surface de base plane (44), de sorte que la paroi de boîtier intérieure (48) et la pièce intermédiaire (46) forment ensemble la première paroi extérieure (42).

7. Procédé selon la revendication 6,
dans lequel le boîtier de module (36) est agencé dans un boîtier de capteur, sur une paroi du boîtier de capteur ou sur une surface de référence solidaire de celui-ci, laquelle forme la surface de base plane (42),
ou
le module capteur (10) est le capteur et le boîtier de module (36) fait simultanément office de boîtier de capteur, de sorte que, une fois le module capteur fabriqué, le capteur est déjà fabriqué.

8. Procédé selon la revendication 6 ou 7,
dans lequel la pièce intermédiaire (46) est munie d'un marquage (51) dont se révèle l'appartenance au capteur (10),
et/ou
la pièce intermédiaire (46) présente un marquage et/ou une structuration permettant de la monter selon l'orientation correcte.
